(19)

Europäisches
Patentamt
European
Patent Office
Office européen
des brevets

(11) **EP 3 410 379 A1**

(12) **EUROPEAN PATENT APPLICATION**
published in accordance with Art. 153(4) EPC

(43) Date of publication:
**05.12.2018 Bulletin 2018/49**

(51) Int Cl.:
*G06Q 30/02* (2012.01)    *G06Q 30/00* (2012.01)
*G06Q 10/06* (2012.01)

(21) Application number: **16888073.0**

(22) Date of filing: **25.10.2016**

(86) International application number:
**PCT/JP2016/081598**

(87) International publication number:
**WO 2017/130488 (03.08.2017 Gazette 2017/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **29.01.2016 JP 2016016608**

(71) Applicant: **Sony Corporation
Tokyo 108-0075 (JP)**

(72) Inventor: **TAKAMATSU, Shingo
Tokyo 108-0075 (JP)**

(74) Representative: **MFG Patentanwälte
Meyer-Wildhagen Meggle-Freund
Gerhard PartG mbB
Amalienstraße 62
80799 München (DE)**

(54) **INFORMATION PROCESSING DEVICE, INFORMATION PROCESSING METHOD, AND PROGRAM**

(57)    [Object] To provide an information processing apparatus, an information processing method, and a program that can present an index to success of a policy for guiding a customer's continuing state to a targeted state.

[Solution] The information processing apparatus includes an output unit configured to output an index to success of a policy that guides a customer to a targeted state, the index being calculated on a basis of past information indicating a change in a continuing state of the customer and past information indicating whether or not the policy that guides the customer who has been changed to the targeted state has been implemented.

**FIG. 3**

**Description**

Technical Field

The present disclosure relates to an information processing apparatus, an information processing method, and a program.

Background Art

Conventionally, in a service for obtaining revenue from continuous contracts such as a flat-rate video streaming service contract or an insurance contract, maintaining the state of contract with users leads to stable sales. Therefore, a withdrawal preventing policy by means of phone call, sending mail, or the like to customers is performed in order to maintain contracts. On this occasion, if the withdrawal preventing policy is implemented for all the customers, the cost for the withdrawal preventing policy will be higher than a profit obtained by withdrawal prevention, and thus, marketing staff selects a customer group considered to be highly likely to withdraw from the contract, and implements the withdrawal preventing policy for the customer group.

Here, regarding a marketing policy, Patent Literature 1 below describes in paragraphs [0002] to [0005] that, as a maximization technique for such a marketing action that the customer lifelong value is maximized, a technique through use of the Markov decision process (abbreviated to MDP) is beneficial, and in the case of learning a customer state having the Markov property, a hidden Markov model (abbreviated to HMM) is used.

Citation List

Patent Literature
Patent Literature 1: JP 2008-152321A

Disclosure of Invention

Technical Problem

However, in the case of only utilizing the probability of customer's withdrawal from the contract for selecting target customers of the withdrawal preventing policy, the withdrawal preventing policy is implemented even for customers for whom the policy is less effective.

Therefore, the present disclosure proposes an information processing apparatus, an information processing method, and a program that can present an index to success of a policy for guiding a customer's continuing state to a targeted state.

Solution to Problem

According to the present disclosure, there is provided an information processing apparatus including an output unit configured to output an index to success of a policy that guides a customer to a targeted state, the index being calculated on a basis of past information indicating a change in a continuing state of the customer and past information indicating whether or not the policy that guides the customer who has been changed to the targeted state has been implemented.

According to the present disclosure, there is provided an information processing method including, by a processor, exerting control so as to output an index to success of a policy that guides a customer to a targeted state, the index being calculated on a basis of past information indicating a change in a continuing state of the customer and past information indicating whether or not a policy that guides the customer who has been changed to the targeted state has been implemented.

According to the present disclosure, there is provided a program for causing a computer to function as an output control unit configured to exert control so as to output an index to success of a policy that guides a customer to a targeted state, the index being calculated on a basis of past information indicating a change in a continuing state of the customer and past information indicating whether or not a policy that guides the customer who has been changed to the targeted state has been implemented.

Advantageous Effects of Invention

According to the present disclosure as described above, it is possible to present an index that a policy for guiding a customer's continuing state to a targeted state succeeds.

Note that the effects described above are not necessarily limitative. With or in the place of the above effects, there may be achieved any one of the effects described in this specification or other effects that may be grasped from this specification.

Brief Description of Drawings

[FIG. 1] FIG. 1 is a diagram showing a schematic configuration of a system according to one embodiment of the present disclosure.

[FIG. 2] FIG. 2 is a block diagram showing an internal configuration of the system according to one embodiment of the present disclosure.

[FIG. 3] FIG. 3 is a block diagram showing a functional configuration example of a database and a processing unit of a server in one embodiment of the present disclosure.

[FIG. 4] FIG. 4 is a block diagram showing another example of a functional configuration of the database and the processing unit of the server in one embodiment of the present disclosure.

[FIG. 5] FIG. 5 is a diagram showing a graphical model of a predictive model according to the present embodiment.

[FIG. 6] FIG. 6 is a flowchart showing operational processing of a learning unit according to the present embodiment.

[FIG. 7] FIG. 7 is a flowchart showing processing of generating a feature amount vector performed by the learning unit of the present embodiment.

[FIG. 8] FIG. 8 is a flowchart showing processing of generating a one-of-k vector performed by the learning unit of the present embodiment.

[FIG. 9] FIG. 9 is a flowchart showing operational processing of a prediction unit according to the present embodiment.

[FIG. 10] FIG. 10 is a diagram showing an example of a customer list screen displayed in the present embodiment.

[FIG. 11] FIG. 11 is a diagram showing another example of a customer list screen displayed in the present embodiment.

[FIG. 12] FIG. 12 is a diagram showing another example of a customer list screen displayed in the present embodiment.

[FIG. 13] FIG. 13 is a diagram showing an example of a customer information detail screen displayed in the present embodiment.

[FIG. 14] FIG. 14 is a diagram showing calculation formulas of a likelihood in a model when calculating a withdrawal prevention probability for each policy displayed in the present embodiment.

[FIG. 15] FIG. 15 is a diagram showing an example of a screen that presents items that affect the withdrawal prevention probability according to the present embodiment.

[FIG. 16] FIG. 16 is a block diagram showing a hardware configuration example of an information processing apparatus according to an embodiment of the present disclosure.

Mode(s) for Carrying Out the Invention

Hereinafter, (a) preferred embodiment(s) of the present disclosure will be described in detail with reference to the appended drawings. Note that, in this specification and the appended drawings, structural elements that have substantially the same function and structure are denoted with the same reference numerals, and repeated explanation of these structural elements is omitted.

In addition, description will be provided in the following order.

1. Overview of system according to one embodiment of present disclosure
1-1. Background
1-2. Overview of algorithm
1-3. System configuration
(1-3-1. Client configuration)
(1-3-2. Server configuration)
2. Functional configuration
2-1. Configuration example of database
2-2. Configuration example of processing unit
3. Operational processing
3-1. Operational processing of learning unit 3301
3-2. Operational processing of prediction unit 3302

4. Information presenting screen example

5. Hardware configuration

6. Conclusion

<<1. Overview of system according to one embodiment of present disclosure>>

<1-1. Background>

In recent years, for selecting customers who are highly likely to withdraw, a withdrawal probability is predicted by machine learning on the basis of contract/customer data, and a withdrawal preventing policy is implemented in descending order of predicted withdrawal probabilities. On this occasion, contract/customer data is used as an input, and machine learning is applied as a classification problem regarding whether to withdraw or not. For example, Non-Patent Literature 1 below describes a technology of predicting a customer's contract conclusion probability by solving a classification problem regarding whether a contract is concluded or not in a machine learning manner. Such a technology can be applied to the above-described calculation of the withdrawal probability.

Non-Patent Literature 1: "Probabilistic Modeling of a Sales Funnel to Prioritize Leads," Brendan Duncan and Charles Elkan, Proceedings of the 21th ACM SIGKDD International Conference on Knowledge Discovery and Data Mining, Pages 1751-1758, 2015

However, when only the probability of customer's withdrawal from the contract is utilized for selecting target customers of the withdrawal preventing policy, the withdrawal preventing policy is implemented even for customers for whom the withdrawal preventing policy is less effective even though the withdrawal probability is high. In addition, there is a problem in that budget for the withdrawal preventing policy cannot be estimated because it is not possible to estimate a return of the withdrawal preventing policy only with the customer's withdrawal probability.

Therefore, in the present embodiment, the above-described problem is solved by predicting a probability that the withdrawal preventing policy succeeds for each customer in addition to the customer's withdrawal probability. That is, as a generic concept, by presenting an index that a policy (also referred to as a marketing policy) for guiding a customer's continuing state to a targeted state succeeds, it is possible for marketing staff to select customers for whom the policy is highly effective.

Note that, since customers for whom the withdrawal preventing policy has been implemented include customers who would not withdraw even if the withdrawal preventing policy has not been implemented, a probability of being such a customer is calculated, the probability is taken into consideration, and a probability that the withdrawal preventing policy succeeds may be calculated in the present embodiment.

An overview of a calculation algorithm of a policy success probability according to such a present embodiment will be described below.

<1-2. Overview of algorithm>

First, a calculation algorithm of an index that a policy (also referred to as a marketing policy) for guiding a customer's continuing state to a targeted state succeeds will be described. For example, a system according to the present embodiment generates the following data entries at a certain time point (a time point t) for each customer, and uses the set of them as learning data of machine learning.

Data entry examples (all of the following may be included.)

- Information representing a customer's state change before and after the time point t
- Information representing whether a certain policy has been implemented or not before the time point t
- Information concerning a customer or a contract at the time point t (vectorized into $x_i \in R^d$, where d represents the number of dimensions of vector, and i represents the customer ID).

Note that the case where there is one policy will be described below, whilst the present embodiment is not limited to this, but a plurality of policies or a plurality of customer's state changes may be considered. In addition, a combination of a plurality of policies may be regarded as one policy.

Next, the system according to the present embodiment estimates a probability that a state change of each customer occurs in the case where a certain policy is implemented (determines a parameter), utilizing a probability model having the following characteristics on the basis of the above-described learning data.

Specifically, the system according to the present embodiment expresses a probability that a state change of each customer occurs in the case where a policy is not implemented by $p(a{\rightarrow}b|x_i)$ which is a probability function of $x_i$ and the parameter. Here, it is assumed that the customer state has changed from a state a to a state b, and the change is expressed as $a{\rightarrow}b$. In addition, a probability that the state change of each customer is caused by the policy is expressed by p'(a→b|x_i) which is a probability function of $x_i$ and the parameter.

Then, as an "index that a policy prompting for a certain state succeeds", the system according to the present embodiment calculates a probability that a state change of each customer occurs in the case of implementing the policy by the functions of p(a→b|x_i) and p'(a→b|x_i), and presents the probability. By selecting customers for whom the policy is to be implemented in descending order of scores corresponding to probabilities calculated in this manner, the marketing staff can implement the policy for customers who are highly likely to make state changes through the policy.

In addition, in the case of implementing the policy for the purpose of guiding the customer state to $a_{target}$, customers may be selected in ascending order of scores of probabilities calculated by Expression 1 below. In Expression below 1, $a_i$ represents the customer's current state, and a' represents an untargeted state. Note that, as the targeted state a target, a transition to a new contract, such as an increase in level of the contents of contract, for example, which is withdrawal from the current state but which increases revenue, is assumed.

[Math. 1]

$$\sum_{a'} p(a_i \rightarrow a'|x_i) p'(a' \rightarrow a_{target}|x_i) - p(a_i \rightarrow a_{target}|x_i) \quad \ldots \text{Expression 1}$$

In the embodiment described below, description will be made using a "withdrawal preventing marketing policy for maintaining a continuous contract" as a specific example of the marketing policy that prompts for a customer's state change described above.

In this case, the system according to the present embodiment generates, for each customer, data entries of "whether contract withdrawal has been made or not, whether the policy has been implemented or not, contract/customer data" at a certain time point, and uses the data entries as learning data of machine learning. As the data entry of contract/customer data, a vectorized feature amount is used. For example, a vectorized feature amount of contract/customer data of a customer i is expressed as $x_i$.

Next, assuming a probability that withdrawal occurs in the case of not performing the withdrawal preventing policy as $p_1(x_i)$, a probability that withdrawal can be prevented by the withdrawal preventing policy as $p_2(x_i)$, and a probability that the intention of continuation is not changed by the withdrawal preventing policy as $p_3(x_i)$, the system according to the present embodiment expresses each event as in Table 1 below. On the basis of this expression, $p_1(x_i)$, $p_2(x_i)$, and $p_3(x_i)$ may be predicted from the learning data by the maximum likelihood estimation.

[Table 1]

| Pattern | Contract state | Policy | Probability that the left event occurs |
|---------|----------------|--------|----------------------------------------|
| 1 | Withdrawal | Not Available | $p_1(x_i)$ |
| 2 | Continuation | Not Available | $1-p_1(x_i)$ |
| 3 | Withdrawal | Available | $p_1(x_i) \times (1-p_2(x_i))+(1-p_1(x_i)) \times (1-p_3(x_i))$ |
| 4 | Continuation | Available | $p_1(x_i) \times p_2(x_i) +(1-p_1(x_i)) \times p_3(x_i)$ |

Then, the system according to the present embodiment calculates $\{p_1(x_i) \times p_2(x_i)+(1-p_1(x_i)) \times p_3(x_i)\}-\{1-p_1(x_i)\}$ as an index that the withdrawal preventing policy succeeds, and presents the index. By selecting customers for whom the withdrawal preventing policy is to be implemented in descending order of scores corresponding to probabilities calculated in this manner (that is, "continuation probability in the case of implementing the policy - continuation probability in the case of not implementing the policy"), the marketing staff can implement the policy for customers who are highly likely to be prevented from withdrawing from the contract by the withdrawal preventing policy.

As an application example of the probability model shown in Table 1 above, Table 2 below shows availability/unavailability of the withdrawal preventing policy by means of phone call and customer configuration in each pattern in a change in contract state.

[Table 2]

| Pattern | Contract state | Phone call | Customer configuration |
|---------|----------------|------------|------------------------|
| 1 | Withdrawal | Not Available | - Withdraw if neglected |

(continued)

| Pattern | Contract state | Phone call | Customer configuration |
|---|---|---|---|
| 2 | Continuation | Not Available | - Continue if neglected |
| 3 | Withdrawal | Available | - Withdraw if neglected & withdrawal cannot be prevented by phone call<br>- Continue if neglected & turn to withdrawal by phone call |
| 4 | Continuation | Available | - Withdraw if neglected & withdrawal can be prevented by phone call<br>- Continue if neglected & keep continuing even when receiving phone call |

In the present embodiment, description will be made using, as an example, a withdrawal preventing marketing policy for an annual flat-rate video streaming Web service, for example. The annual flat-rate video streaming Web service is a one-year contract system, for example, and is a system that allows video provided by the service to be freely viewed from a Web site for one year by payment of an annual contract amount. As a marketing policy for preventing withdrawal from the contract, distribution of a gift coupon by mail is considered. When a coupon ID written on the coupon is input on a designated screen of the Web service, a discount of the annual contract amount shall be able to be obtained. Since it requires cost for preparing and mailing gift mail with the coupon written thereon, it is necessary to mail a coupon (hereinafter briefly referred to as a coupon) only to customers who will compensate for the cost. Implementing the marketing policy through use of a coupon once a month, for example, for customers who will reach contract renewal within the next one month is assumed. In the embodiment which will be described below, a system in which customers to whom the coupon is to be mailed can be selected effectively will be described. Marketing staff who selects customers to whom the coupon is to be mailed is assumed as a user of the system.

Subsequently, the overall configuration of the system according to the present embodiment will be described.

<1-3. System configuration>

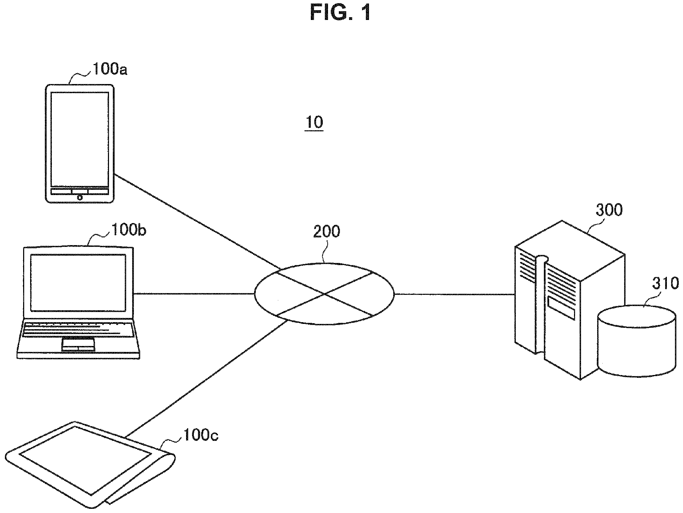

FIG. 1 is a diagram showing a schematic configuration of a system according to one embodiment of the present disclosure. With reference to FIG. 1, a system 10 according to the present embodiment includes a client 100 and a server 300. The client 100 and the server 300 are connected via a network 200, and can communicate with each other.

The client 100 may include a smartphone 100a, a personal computer 100b, a tablet 100c, and the like, for example. The client 100 is not limited to the illustrated example, but may include every kind of terminal devices having the function of inputting/outputting information from/to a user. The client 100 uses an image, sound, or the like, for example, in order to output information to the user. In addition, the client 100 may accept input of information from the user by an operation input of a terminal device, a voice indicating speech, an image indicating a gesture or a line of sight, or the like.

The server 300 includes one or a plurality of server devices on a network. In the case where a plurality of server devices cooperate to achieve the functions of the server 300 which will be described below, the plurality of server devices as a whole may be treated as a single information processing apparatus. Alternatively, at least some of the server devices may be managed by an operator different from an operator of the server 300 which will be described below. In such a case, in the following description, part of the server 300 may be referred to as an external server not included in the system 10. In the present embodiment, at least some of the server devices have a database 310. Information concerning customers and contract information of the customers is stored in the database 310.

The network 200 includes various types of wired or wireless networks, such as the Internet, a local area network (LAN), or a mobile phone network, for example. The network 200 may connect a plurality of server devices included in the server 300 while connecting the client 100 and the server 300. In such a case where a plurality of types of networks are included in the network 200, the network 200 may include a router, a hub, and the like that connect those networks to one another.

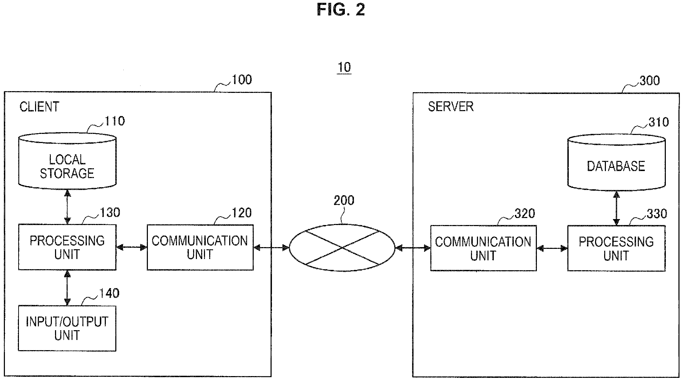

FIG. 2 is a block diagram showing an internal configuration of the system according to one embodiment of the present disclosure. With reference to FIG. 2, the client 100 may include a local storage 110, a communication unit 120, a processing unit 130, and an input/output unit 140. The server 300 may include the database 310, a communication unit 320, and a processing unit 330. Hereinafter, respective functional configurations will be described further. Note that a terminal device functioning as the client 100 and one or a plurality of server devices included in the server 300 are achieved by a hardware configuration of an information processing apparatus which will be described later, for example.

(1-3-1. Client configuration)

The local storage 110 is achieved by a memory or a storage included in the terminal device, for example.

Information provided from the server 300 via the network 200 and information input by the user via the input/output unit 140, for example, are stored temporarily or sustainably in the local storage 110. Utilizing information stored in the local storage 110, the user can refer to information provided from the server 300 even off-line, and can input draft of information to be provided for the server 300.

The communication unit 120 communicates with the server 300 via the network 200. The communication unit 120 is achieved by a communication device that executes communication over a network to which the client 100 is connected, for example.

The processing unit 130 is achieved by a processor such as a central processing unit (CPU) included in the terminal device, for example. For example, the processing unit 130 executes processing of requesting information from the server 300 via the communication unit 120 on the basis of information input by the user via the input/output unit 140. In addition, for example, the processing unit 130 executes processing of outputting information to the user via the input/output unit 140 on the basis of information provided from the server 300 via the communication unit 120. At this time, the processing unit 130 may execute processing of converting the provided information into an appropriate format in accordance with the type of the input/output unit 140.

The input/output unit 140 is achieved by, for example, an input device such as a touch panel, a mouse, a keyboard, a microphone, or a camera (imaging device) included in the terminal device, and an output device such as a display and a speaker. Note that the input/output unit 140 may include only either the input device or the output device. For example, on the display included in the input/output unit 140, information received from the server 300 via the communication unit 120 is displayed upon undergoing processing by the processing unit 130. In addition, for example, an operation input of the user acquired by the touch panel or the like included in the input/output unit 140 is transmitted to the server 300 via the communication unit 120 upon undergoing processing by the processing unit 130.

The functions themselves of the processing unit 130 and the input/output unit 140 as described above are similar to the functions of a processing unit and an input/output unit in a typical terminal device, for example, and thus, may not be described in detail in some cases in the following description of the present embodiment. Even in such a case, however, the functions of the processing unit 130 or the input/output unit 140 in the client 100 may also be characteristic as compared with those functions in a typical terminal device in that, if information received from the server 300, for example, is characteristic, such information is processed and output.

(1-3-2. Server configuration)

The database 310 is achieved by a memory or a storage included in the server device, for example. As described above, information concerning customers and contracts of the customers is stored in the database 310. More specific types of information stored in the database 310 may be different depending on the contents of a service provided by the server 300.

The communication unit 320 communicates with the client 100 via the network 200. In addition, the communication unit 320 may communicate with an external server via the network 200. The communication unit 320 is achieved by a communication device that executes communication over a network to which the server 300 is connected, for example.

The processing unit 330 is achieved by a processor such as a CPU included in the server device, for example. For example, the processing unit 330 executes processing of acquiring information from the database 310 on the basis of information received from the client 100 via the communication unit 320, and processing the acquired information according to necessity for transmission to the client 100 via the communication unit 320.

Note that, in the case where the server 300 includes a plurality of server devices, the functional configuration of the server 300 described above may be achieved in a manner dispersed to the plurality of server devices. For example, the functions of the database 310 may be achieved intensively in any of the server devices, or may be achieved by integrally managing databases dispersed to the plurality of server devices. In addition, for example, the functions of the processing unit 330 may be achieved by integrally managing processors dispersed to the plurality of server devices. In this case, the functions of the processing unit 330 which will be described below may be achieved in a manner dispersed to the plurality of server devices in series or in parallel, regardless of the segment of functional blocks defined for description.

<<2. Functional configuration>>

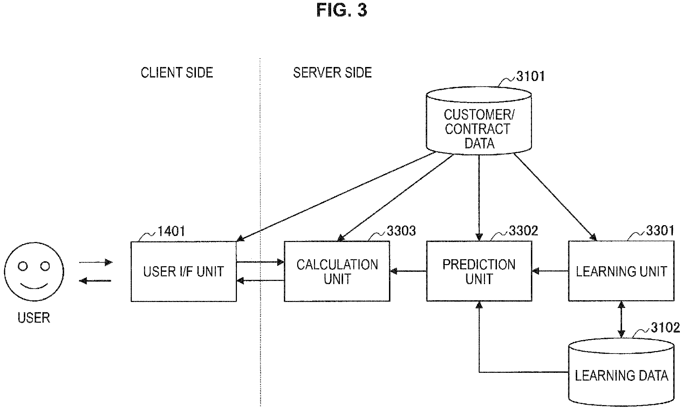

Subsequently, the functional configuration of the database 310 and the processing unit 330 of the server 300 will be described with reference to FIG. 3 and.

FIG. 3 is a block diagram showing a functional configuration example of a database and a processing unit of a server in one embodiment of the present disclosure. In FIG. 3, customer/contract data 3101 and learning data 3102 are shown as the functions of the database 310 of the server 300, and in addition, a learning unit 3301, a prediction unit 3302, and a calculation unit 3303 are shown as the functions of the processing unit 330. In addition, in FIG. 3, a user I/F unit 1401 is shown as the function of the input/output unit 140 of the client 100.

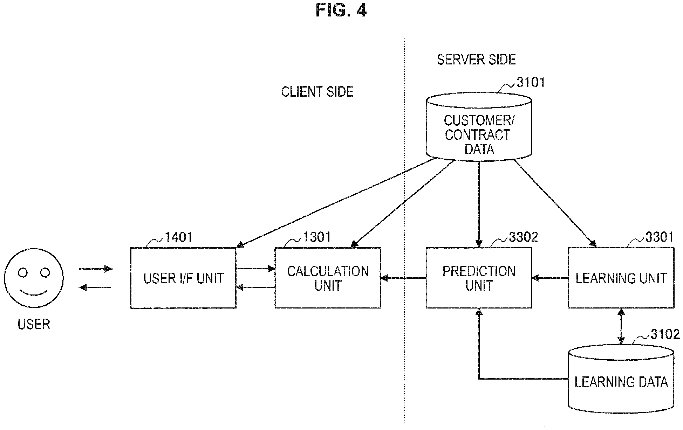

Note that the configuration according to the present embodiment is not limited to the example shown in FIG. 3, but some of the functions of the server 300, for example, may be located in the client 100. FIG. 4 is a block diagram showing another example of the functional configuration of the database and the processing unit of the server in one embodiment of the present disclosure. In FIG. 4, as the function of the processing unit 130 of the client 100, a calculation unit 1301 is shown. In this manner, as another example of the present embodiment, the case where the calculation unit is located on the client side is also assumed.

Hereinafter, the respective components will be described further.

<2-1. Configuration example of database>

(Customer/contract data 3101)

The customer/contract data 3101 functions as master data of customers and contracts handled in a service provided by the server 300. The customer/contract data may include customer information, contract information, contract state information, policy implementation information, and the like, for example. The customer information is information representing customer's characteristics including a customer attribute and a customer's action log (video viewing or the like) on the Web service. More specifically, for example, the customer information may include age, sex, address, family structure, video viewed in the past, genres of frequently viewed video, and the like. Although the detail will be described later, the learning unit 3301 generates a feature amount vector of a customer on the basis of the customer information and the contract information.

The contract information is information concerning the contract, and is information representing characteristics of the contract. For example, the contract information may include contract continuing years, contracted year and month, withdrawal in the past or not, payment method, agent at contract conclusion, utilization of discount or not, and the like. The contract state information is information representing a contract state such as whether under contract or not, and is utilized as a teacher label of the customer state in the learning unit 3301. For example, the contract state information may include whether currently under contract or not, and in the case where withdrawal has been made, the date and time of withdrawal, and the like. The policy implementation information is information representing a policy implementation history about whether the withdrawal preventing policy has been implemented in the past or not, and the like, and is treated as input information different from the feature amount vector. For example, the policy implementation information may include whether a coupon has been mailed or not, and in the case of mailing has been performed, the forwarding date and time, and the like. In the customer/contract data 3101, data concerning the contract as described above is registered in association with the ID which is unique to each customer, for example.

(Learning data 3102)

The learning data 3102 includes a feature amount of the customer/contract data (hereinafter also referred to as a customer/contract feature amount) registered in the customer/contract data 3101. The customer/contract data 3101 is generated by the learning unit 3301 using the customer/contract data 3101, for example. Processing of generating the learning data 3102 is executed once a month, for example. Specifically, for example, the customer/contract feature amount may be a vector extracted from each data item for a certain piece of customer/contract data (specified by the customer ID). In the learning data 3102, such a feature amount vector may be stored in association with the customer ID. Basically, one feature amount is stored for one customer. Consequently, the learning data 3102 may be utilized as information representing the customer's current state, for example. Note that the details of processing of the learning unit 3301 for generating the feature amount will be described later.

A configuration example of the database 310 has been described above.

<2-2. Configuration example of processing unit>

(Learning unit 3301)

The learning unit 3301 utilizes customer/contract data in the past as learning data, and performs processing of calculating (generating) various parameters of a predictive model by machine learning.

The learning unit first generates the learning data 3102 from the customer/contract data 3101, and then generates a parameter of a predictive model on the basis of the learning data 3102. These types of processing are executed cyclically such as once a month, for example, to update a parameter held in the prediction unit 3302 to the calculated parameter.

(Generation of learning data 3102)

As described above, using, as an example, a withdrawal preventing marketing policy for an annual flat-rate video streaming Web service, for example, the learning data 3102 is generated for customers who have renewed the contract or withdrawn within the past 11 months, for example, in the case where the annual flat-rate video streaming Web service is a one-year contract system. That is, customers who will reach the contract renewal time within the next one month to be prediction targets are not included.

The learning data 3102 according to the present embodiment includes a set of customer data entries generated for each target customer. The customer data entry includes three elements of "whether under contract or not", "whether the policy has been implemented or not", and the "feature amount vector".

Whether under contract or not may be generated from the contract state information included in the customer/contract data 3101. In addition, whether the policy has been implemented or not within the past 11 months may be generated from the policy implementation information included in the customer/contract data 3101.

The feature amount vector is a vector extracted from the customer/contract data 3101, and is an example of the feature amount data. Such a feature amount vector may be generated by simply linking data items, for example. In the present embodiment, the feature amount vector may be generated for each customer ID that uniquely specifies the customer/contract data 3101, and combined data such as "the customer ID, whether under contract or not, whether the policy has been implemented or not, and the feature amount vector" may be stored as the learning data 3102.

The learning unit 3301 first converts each of items (age, address, and the like) of the customer information and the contract information into a vector called a one-of-k vector. The one-of-k vector is a k-dimensional vector, and is a vector in which only one element takes a value of 1, and the remaining (k-1) elements take a value of 0.

The method of converting each item into the one-of-k vector will be described. The learning unit 3301 lists values that the item may take, generates a vector of the same dimension as the number of values that may be taken, and determines the dimensions corresponding to the values that may be taken. In vectorization, by setting a dimension corresponding to the value of the item at 1 and the remainder at 0, the value of the item is converted into the one-of-k vector. For example, in the case of converting the age into the one-of-k vector, 82-dimensional vectors from 18 to 99 are prepared as values that may be taken, and are caused to correspond to the ages from 18 sequentially from the first order. In the case of converting the item in which the age is 20, 82-dimensional one-of-k vectors in which the third order is 1 and the remainder are 0 are generated.

In this manner, the one-of-k vector may be generated for each item of the customer information and the contract information, and vectors linked in a prescribed order can be the feature amount vector of a customer. Note that, for action history information such as video viewed in the past, vectors of dimensions of the types of video may be prepared, and a vector in which a dimension corresponding to video viewed in the past is 1 and the remaining dimensions are 0 may be generated.

(Generation of parameter of predictive model)

The learning unit 3301 functions as a generation unit that carries out machine learning using the learning data 3102 to calculate (generate) various parameters. For example, the learning unit 3301 calculates by machine learning various parameters for use in a probability predictive model to be used in processing of predicting a policy success probability performed by the prediction unit 3302. Hereinafter, learning of a probability predictive model performed by the learning unit 3301 will be described specifically. Note that a learning method which will be described below is an example, and is not necessarily limited to this.

The learning unit 3301 first defines the following variables. In the expressions below, i represents the customer ID.

$y_i \in \{1,0\}$: 1 in the case where withdrawal has been made, and 0 in the case where continuation has been made. Corresponds to whether under contract or not.

$c_i \in \{1,0\}$: 1 in the case where the policy has been implemented, and 0 in the case where the policy has not been implemented. Corresponds to whether the policy has been implemented or not.

$h_i \in \{1,0\}$: In the case of not implementing the policy, 1 in the case of withdrawal, and 0 in the case of continuation. Treated as a hidden variable of a probability model as it cannot be observed.

$x_i \in R^d$: Feature amount vector.

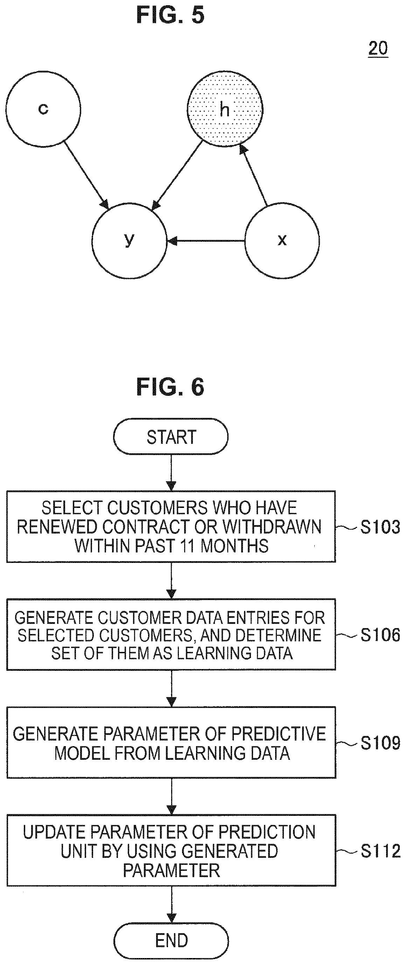

Next, the learning unit 3301 determines a probability of each event in the following manner. Note that a graphical model 20 of the following predictive model is shown in FIG. 5.

$$p(h_i=1|x_i)=f_h(x_i;w_h):w_h \in R^{d_h}_h \ (d_h)$$

: Parameter of a model for predicting $h_i$, corresponding to a "probability of withdrawal in the case of not performing the policy". Here, $d_h$ represents the dimension of a parameter $w_h$.

$$p(y_i=0|c_i=1,h_i=1,x_i)=f_{y1}(x_i;w_y1):w_y1 \in R^{d_{y1}} \ (d_y1)$$

: Parameter of a model for predicting $y_i$ when $c_i=1$ and $h_i=1$. Here, $d_y1$ represents the dimension of a parameter $w_y1$. In addition, $f_{y1}(x_i;w_{y1})$ corresponds to a "probability that withdrawal can be prevented in the case of performing the policy".

$$p(y_i=0|c_i=1,h_i=0,x_i)=f_y2(x_i;w_{y2})$$

: Parameter of a model for predicting $y_i$ when $w_{y2} \in R^{d_{y2}}(d_{y2}):c_i=1$ and $h_i=1$. Here, $d_{y2}$ represents the dimension of a parameter $w_{y2}$. In addition, $f_{y2}(x_i;w_{y2})$ corresponds to a "probability that continuation is kept even if the policy is performed".

$$p(y_i=1|c_i=0,h_i=1,x_i)=1$$

: Based on the definition of $h_i$.

$$p(y_i=1|c_i=0,h_i=0,x_i)=0$$

: Based on the definition of $h_i$.

In the above-described parameters, $f_h(x;w_h)$, $f_{y1}(x;w_{y1})$, and $f_{y2}(x;w_{y2})$ are parametric functions that take values of more than or equal to 0 and less than or equal to 1, and may utilize a logistic regression model or a neural network, for example.

Then, the learning unit 3301 determines (calculates) various parameters ($w_h$, $w_{y1}$, $w_{y2}$) by the maximum likelihood estimation. The maximum likelihood estimation is performed by execution of a gradient descent method, for example. An example of likelihood estimation is shown in Expression 2 below.

[Math. 2]

$$p(y_i|c_i,x_i) = \sum_{h_i} p(y_i|c_i,h_i,x_i)p(h_i|x_i)$$

$$= \begin{cases} \left(1-f_{y1}(x_i,w_{y1})\right)f_h(x_i,w_h)+\left(1-f_{y2}(x_i,w_{y2})\right)\left(1-f_h(x_i,w_h)\right) & if\ y_i=1\ and\ c_i=1 \\ f_{y1}(x_i,w_{y1})f_h(x_i,w_h)+f_{y2}(x_i,w_{y2})\left(1-f_h(x_i,w_h)\right) & if\ y_i=0\ and\ c_i=1 \\ f_h(x_i,w_h) & if\ y_i=1\ and\ c_i=0 \\ \left(1-f_h(x_i,w_h)\right) & if\ y_i=0\ and\ c_i=0 \end{cases}$$

$$\ldots \text{Expression 2}$$

(Prediction unit 3306)

A prediction unit 3306 utilizes parameters learned in the learning unit 3301 to predict "continuation probability in the case of implementing the policy - continuation probability in the case of not implementing the policy" by a predictive model.

More specifically, the prediction unit 3306 predicts the "probability of withdrawal in the case of not performing the policy", the "probability that withdrawal can be prevented in the case of performing the policy", and the "probability that continuation is kept even if the policy is performed" for customers who will reach the contract renewal time within the next one month.

First, the prediction unit 3306 generates the feature amount vector for customers who will reach the contract renewal time within the next one month using the customer/contract data 3101 by similar processing to the learning unit 3301. Next, the prediction unit 3306 calculates the "probability of withdrawal in the case of not performing the policy" by $f_h(x;w_h)$ using parameters learned in the learning unit 3301, calculates the "probability that withdrawal can be prevented in the case of performing the policy" by $f_{y1}(x_i;w_{y1})$, and calculates the "probability that continuation is kept even if the policy is performed" by $f_{y2}(x_i;w_{y2})$. The calculated predicted values are output to the calculation unit 3303.

Note that, in the case where there are few track records of the policy, it is necessary to actively implement the policy for customers for whom the policy has not been implemented, and to collect a wide range of variations of learning data. Therefore, for example, the predictive confidence levels of $f_{y1}(x_i;w_{y1})$ and $f_{y2}(x_i;w_{y2})$ are considered in addition to the values of $f_h(x;w_h)$, $f_{y1}(x_i;w_{y1})$, and $f_{y2}(x_i;w_{y2})$, so that customers with low confidence levels are also selected as policy target people for the purpose of collecting data.

That is, rather than $f_h(x;w_h) \times f_{y1}(x_i;w_{y1}) + (1-f_h(x;w_h)) \times f_{y2}(x_i;w_{y2}) - (1-f_h(x;w_h))$ in the case of not considering the confidence level (that is, "continuation probability in the case of implementing the policy - continuation probability in the case of not implementing the policy"), the policy is implemented in the order of $f_h(x;w_h) \times f_{y1}(x_i;w_{y1}) + (1-f_h(x;w_h)) \times f_{y2}(x_i;w_{y2}) - (1-f_h(x;w_h))$ - predictive confidence level of $f_{y1}(x_i;w_{y1})$ + predictive confidence level of $f_{y2}(x_i;w_{y2})$).

Note that the confidence levels of prediction of $f_{y1}(x_i;w_{y1})$ and $f_{y2}(x_i;w_{y2})$ may be calculated utilizing Non-Patent Literature 2 below. In the case where $f_{y1}(x_i;w_{y1})$ is logistic, the prediction unit 3306 can calculate $-x_i^t A_{y1} x_i$ using a variance-covariance matrix $A_{y1}$ when a normal distribution is set as a posterior probability distribution of the parameter $w_{y1}$.

Non-Patent Literature 2: "A Contextual-Bandit Approach to Personalized News Article Recommendation," Lihong Li, Wei Chu, John Langford, and Robert E. Schapire, Proceedings of the 19th International Conference on World Wide Web, Pages 661-670, 2010

(Calculation unit 3303)

The calculation unit 3303 calculates a numeric value requested from the user I/F unit 1401 of the client 100 using a probability output by the prediction unit 3302. In addition, the calculation unit 3303 generates data to be output to the user I/F unit 1401 such as the display included in the input/output unit 140 of the client 100, and causes the data to be transmitted from the communication unit 320 to the client 100. Such data is a resultant image including the calculated numeric value, for example. Note that the method of outputting information in the client 100 is not limited to image display, but sound output, for example, may be adopted together with or instead of image display.

For example, the calculation unit 3303 calculates a profit margin for each customer on the basis of the policy success probability, policy cost, customer profit (a discount amount is subtracted according to necessity), and generates a customer list image in which the calculated values are arranged in descending order as scores, and transmits the customer list image to the client 100. The policy success probability may be calculated by "continuation probability in the case of implementing the policy - continuation probability in the case of not implementing the policy" using the probability calculated in the prediction unit 3302.

Note that the user I/F unit 1401 of the client 100 accepts an input from the user, and transmits the input data from the communication unit 120 to the server 300 or presents information transmitted from the server 300 to the user.

The functional configuration of the database 310 and the processing unit 330 of the server 300 according to the present embodiment has been described above.

<<3. Operational processing>>

Subsequently, operational processing according to the present embodiment will be described specifically with reference to FIG. 6 to FIG. 9.

<3-1. Operational processing of learning unit 3301>

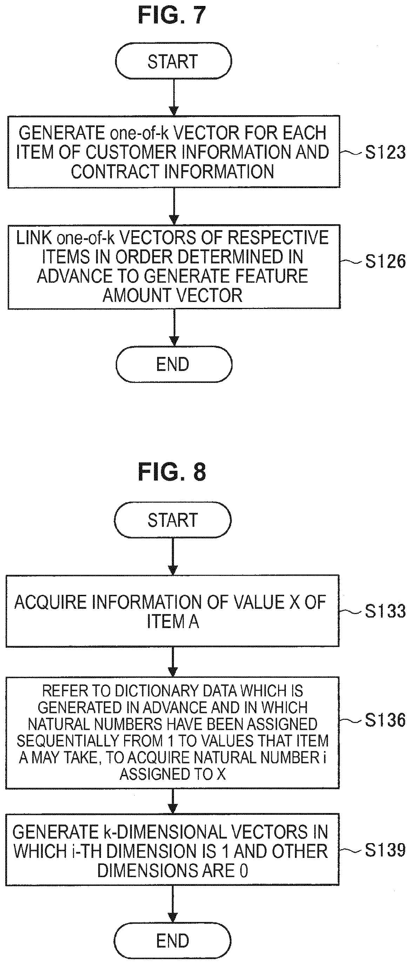

FIG. 6 is a flowchart showing operational processing of the learning unit 3301 according to the present embodiment. As shown in FIG. 6, first, the learning unit 3301 selects customers who have renewed the contract or withdrawn within the past 11 months on the basis of the customer/contract data (step S103), generates customer data entries for the selected customers, and determines the set of them as the learning data 3102 (step S106). The customer data entry includes three elements of "whether under contract or not", "whether the policy has been implemented or not", and the "feature amount vector", as described above. Processing of generating the "feature amount vector" will be described later with reference to FIG. 7.

Next, the learning unit 3301 generates a parameter of a predictive model from the learning data 3102 (step S109), and updates the parameter of the prediction unit 3302 by using the generated parameter (step S112).

(Generation of feature amount vector)

FIG. 7 is a flowchart showing processing of generating the feature amount vector performed by the learning unit 3301. As shown in FIG. 7, the learning unit 3301 generates the one-of-k vector for each item of the customer information and the contract information (step S123). Processing of generating the one-of-k vector will be described later with reference to FIG. 8.

Next, the learning unit 3301 links the one-of-k vectors of the respective items in an order determined in advance to generate the feature amount vector (step S126).

(Generation of one-of-k vector)

FIG. 8 is a flowchart showing processing of generating the one-of-k vector according to the present embodiment. As shown in FIG. 8, the learning unit 3301 acquires information of a value X of an item A from the customer information and the contract information (step S133).

Next, the learning unit 3301 refers to dictionary data, generated in advance, in which natural numbers have been assigned sequentially from 1 to values that the item A may take to acquire a natural number i assigned to X (step S136). For example, in the case of converting the age into the one-of-k vector, 82-dimensional vectors from 18 to 99 are prepared in advance as values that may be taken, and the learning unit 3301 acquires a natural number 3 assigned to the value "20" of the item "age".

Then, the learning unit 3301 generates k-dimensional vectors in which the i-th dimension is 1 and other dimensions are 0 (step S139). That is, for example, in the case of converting the item in which the age is 20, the learning unit 3301 generates 82-dimensional one-of-k vectors in which the third dimension is 1 and the remainder are 0.

<3-2. Operational processing of prediction unit 3302>

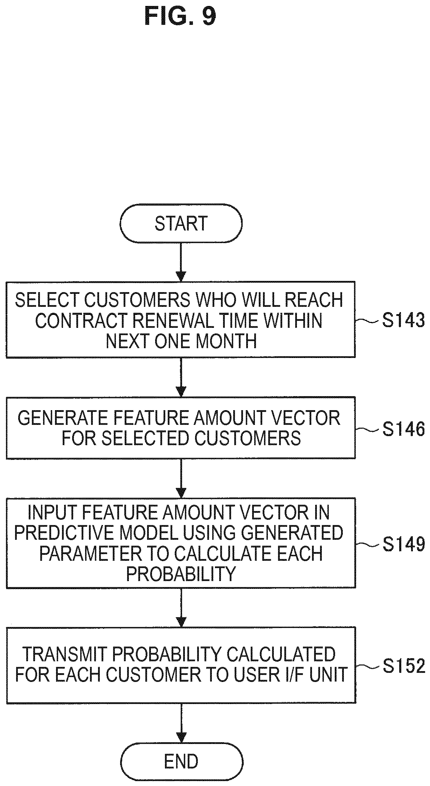

FIG. 9 is a flowchart showing operational processing of the prediction unit 3302 according to the present embodiment. As shown in FIG. 9, first, the prediction unit 3302 selects customers who will reach the contract renewal time within the next one month (step S143).

Next, the prediction unit 3302 generates the feature amount vector for the selected customers, similarly to the processing performed by the learning unit 3301 (step S146).

Next, the prediction unit 3302 inputs the feature amount vector in the predictive model using the parameter generated in the learning unit 3301 to calculate each probability (step S149).

Then, the prediction unit 3302 transmits each probability calculated for each customer to the user I/F unit 1401 included in the input/output unit 140 of the client 100 via the communication unit 320 (step S152).

<<4. Information presenting screen example>>

Subsequently, an example of information presented in one embodiment of the present disclosure will be described with reference to an example of a screen displayed on the display (the user I/F unit 1401) included in the input/output unit 140 in the client 100, for example. Note that, in the following description, an example of information presented when selecting target customers for whom the withdrawal preventing marketing policy for an annual flat-rate video streaming service is to be implemented will be described, whilst information may also be presented similarly when selecting target customers for whom a withdrawal preventing marketing policy for another contract is to be implemented.

In the present embodiment, a profit margin is calculated by the calculation unit 3303 of the server 300, for example, on the basis of the policy success probability, policy cost, and customer profit, and a customer list screen in which the customer IDs are arranged in descending order of values of the profit margin is displayed on the user I/F unit 1401 of the client 100, and can assist selection of policy implementation target customers made by marketing staff (user).

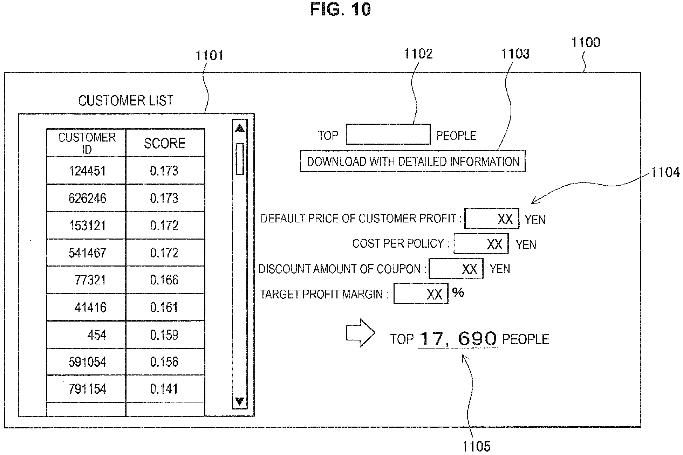

FIG. 10 is a diagram showing an example of the customer list screen displayed in the present embodiment. In the illustrated example, a customer list 1101, a downloaded-number-of-people designation field 1102, a download button 1103, an information input field 1104, and a calculation result 1105 are displayed in a screen 1100.

In the customer list 1101, using values obtained by the calculation unit 3303 of the server 300 calculating, for respective customers, "continuation probability in the case of implementing the policy - continuation probability in the case of not implementing the policy" (a substantial policy success probability) on the basis of the probabilities calculated in the prediction unit 3302 as scores, the customer IDs are arranged in descending order of the scores. The marketing staff selects customers for whom the policy is to be implemented with reference to the customer list 1101.

In this case, it is assumed that the marketing staff selects customers whose policy success probabilities (that is, withdrawal prevention probabilities by means of the policy) are high, that is, selects a predetermined number of top people. The marketing staff transmits the selected customers to a policy implementer, for example, in the case where the policy is "phone call", information concerning the selected customers to a call center. In accordance with such an application, in the example shown in FIG. 10, the downloaded-number-of-people designation field 1102 and the download button 1103 are provided in the screen 1100. The marketing staff inputs the policy implementation target customers to be informed to the call center in the downloaded-number-of-people designation field 1102 in the form of a certain number of top people, and selects the download button 1103. The client 100 transmits the input information to the server 300 via the network 200. In accordance with an instruction from the marketing staff, the server 300 transmits the customer IDs of a predetermined number of top people (together with detailed information such as the telephone number and address according to necessity) to the call center (not shown) as information indicating policy implementation target people.

In addition, the calculation unit 3303 according to the present embodiment is also capable of calculating the number of people obtained by considering the profit margin as reference information when the marketing staff considers how many top people should be selected as policy implementation target people, and presenting the number of people to the user. The marketing staff can input a default amount of customer profit, cost per policy, discount amount of coupon, and target profit margin in the information input field 1104, and can obtain information about the number of top people for whom the policy should be implemented.

The values input in the information input field 1104 are transmitted to the server 300, and calculation of Expression 3 below is performed by the calculation unit 3303.

$$\{(\text{default value of customer profit}) - (\text{discount amount of coupon})\} \times (\text{continuation probability in the case of implementing the policy} - \text{continuation probability in the case of not implementing the policy}) - (\text{cost per policy})$$

… Expression 3

The calculation unit 3303 calculates the profit amount for each customer by Expression 3 above, and calculates the profit margin by sequentially adding the profit amounts from the top. Then, the calculation unit 3303 calculates the number of top people by whom a designated target profit margin is to be satisfied, and transmits the calculation result to the client 100. The client 100 displays the received calculation result 1105 in the screen 1100. This allows the marketing staff to recognize the number of top people by whom the target profit margin is to be satisfied by implementing the policy, and to make a reference when selecting policy implementation target customers.

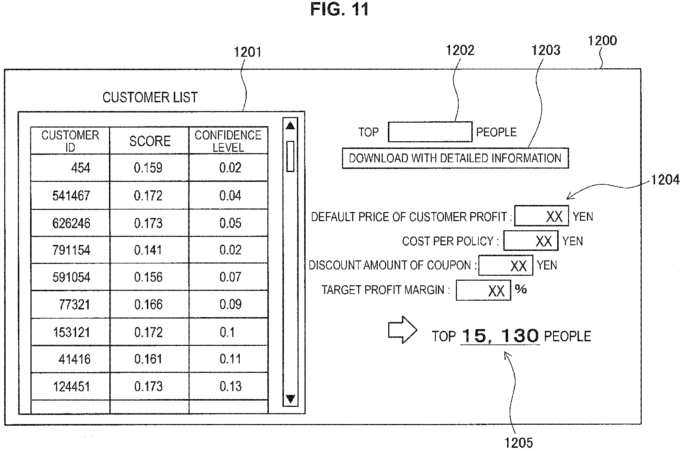

In addition, as another information presentation screen, predictive confidence levels may be displayed in line with the scores of the predicted policy success probabilities in the customer list. An example of a screen in which the predictive confidence levels are also arranged is shown in FIG. 11.

In the illustrated example, a customer list 1201, a downloaded-number-of-people designation field 1202, a download button 1203, an information input field 1204, and a calculation result 1205 are displayed in a screen 1200. In the customer list 1201, the customer IDs, scores, and confidence levels are displayed in correspondence.

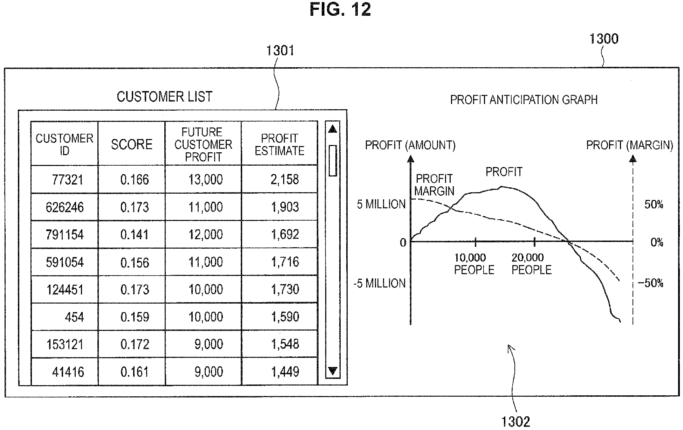

In addition, an example of another information presentation screen is shown in FIG. 12. FIG. 12 is a diagram showing another example of a customer list screen displayed in the present embodiment.

In the illustrated example, a customer list 1301 and a profit prediction graph 1302 are displayed in a screen 1300. In the customer list 1301, the customer IDs, scores, future customer profits, and profit estimates are displayed in correspondence. In addition, the customer list 1301 is arranged in descending order of future customer profits.

The customer profit is the product of a predicted value of future contract continuing years and a profit amount per year. Here, it is possible for the calculation unit 3303 to calculate the predicted value of contract continuing years by machine learning as a regression problem in which the feature amount vector excluding the contract continuing years of the contract information is input, and output is the contract continuing years.

The profit prediction graph 1302 is to display, as a graph, a prospective profit margin and a prospective profit in the case of implementing the policy for customers having higher scores. The prospective profit margin may be calculated by Expression 4 below, for example.

{(predicted value of customer profit) - (discount amount of coupon)} × (continuation probability in the case of implementing the policy - continuation probability in the case of not implementing the policy)

… Expression 4

In addition, the horizontal axis of the profit prediction graph 1302 indicates the number of policy implementation target customers (the number of people having higher scores). The profit prediction graph 1302 shown in the screen 1300 may be presented after information necessary for calculation, such as the coupon discount amount, is input by the marketing staff.

In addition, the downloaded-number-of-people designation field 1102 and the download button 1103 as shown in the screen 1100 are not displayed in the screen 1300, whilst the screen may include them.

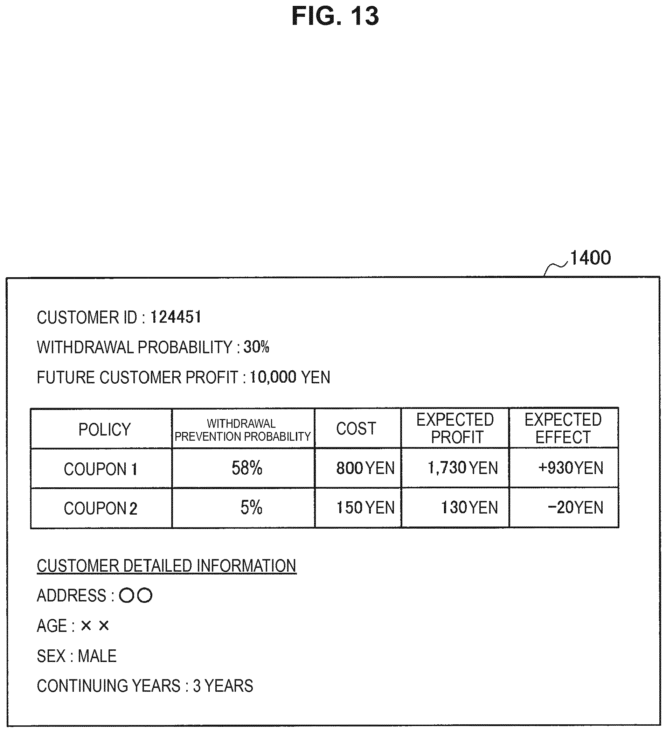

Next, an example of a customer information detail screen displayed in the case where a customer ID included in the customer list 1301 in the screen 1300 has been selected is shown in FIG. 13.

In the illustrated example, the customer ID, withdrawal probability, future customer profit, information of each policy, and customer detailed information (address, age, sex, the number of contract continuing years, and the like) are displayed in a screen 1400.

Here, it is assumed that a plurality of types of policies (for example, coupons) exist, and as information of each policy, the withdrawal prevention probability, policy cost, expected profit, and expected effect are displayed, and accordingly, the effect of each policy is visualized. Each piece of information of each policy is obtained by the calculation unit 3303 as will be described below.

- Withdrawal prevention probability: continuation probability in the case of implementing the policy - continuation probability in the case of not implementing the policy
- Cost: expenses per policy
- Expected profit: {(predicted value of customer profit) - (discount amount of coupon)} × ((continuation probability in the case of implementing the policy - continuation probability in the case of not implementing the policy)
- Expected effect: {(predicted value of customer profit) - (discount amount of coupon)} × (continuation probability in the case of implementing the policy - continuation probability in the case of not implementing the policy) - (cost per policy)

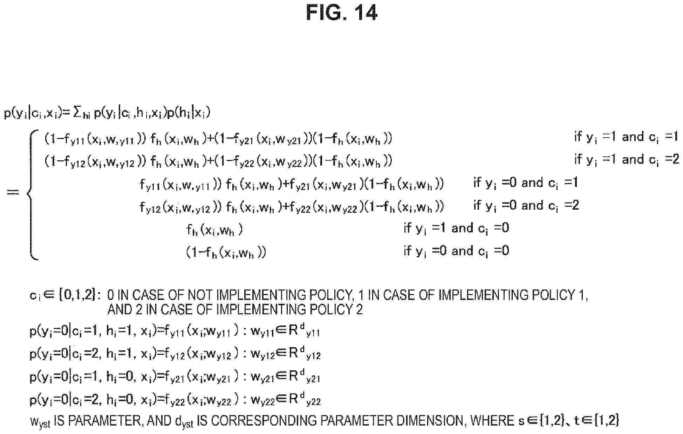

The calculation unit 3303 calculates the "withdrawal prevention probability" for each type of policy using $f_{y1}$ $(x_i;W_{y1})$ and $f_{y2}$ $(x_i;w_{y2})$ learned for each type of policy. Calculation formulas of the likelihood of such a model are shown in FIG. 14.

In addition, visualization of the effect of each policy is not limited to the example shown in FIG. 13, but, for example, a coupon that produces the maximum expected effect may be selected for each customer, and in the case where the expected effect is larger than a threshold value, the coupon may be presented to the user.

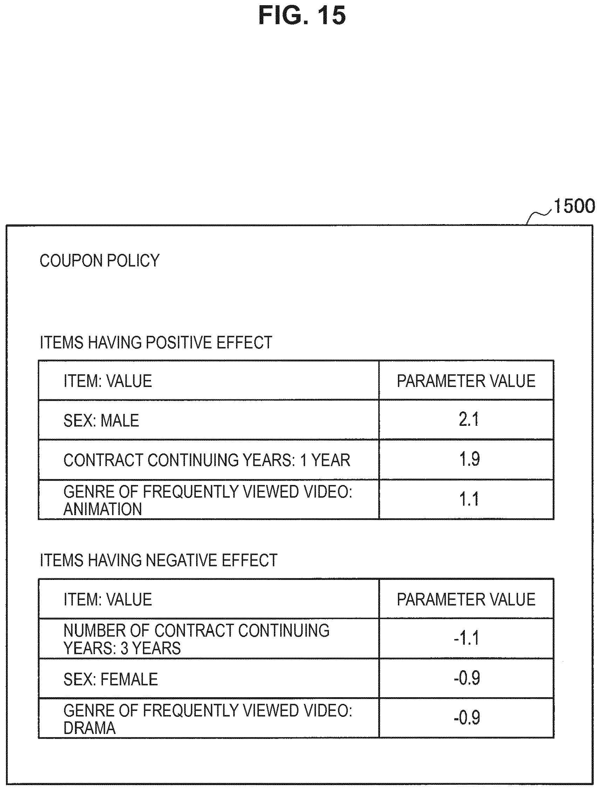

Further, in the present embodiment, an "item, value" pair having a positive effect on the withdrawal prevention probability and an "item, value" pair having a negative effect may be output as information to be referred to when the marketing staff studies a new policy. Hereinafter, description will be made with reference to FIG. 15.

FIG. 15 is a diagram showing an example of a screen that presents items that influence the withdrawal prevention probability according to the present embodiment. In the illustrated example, an "item, value" pair having a positive effect on the withdrawal prevention probability of a coupon policy (that is, a probability that withdrawal can be prevented in the case of performing the policy) and an "item, value" pair having a negative effect are displayed in a screen 1500.

As the "item, value" pair having a positive effect, a pair in which a parameter assigned to each "item, value" when learning $f_{y1}$ $(x_i;w_{y1})$ by logistic regression, for example, has a small value is selected. In addition, as the "item, value" pair having a negative effect, a pair in which a similar parameter has a large value is selected.

In the example shown in FIG. 15, the marketing staff recognizes that expanding dramas targeted for women is likely to be effective for a policy of appealing a drama that starts after the contract renewal time.

<<5. Hardware configuration example>>

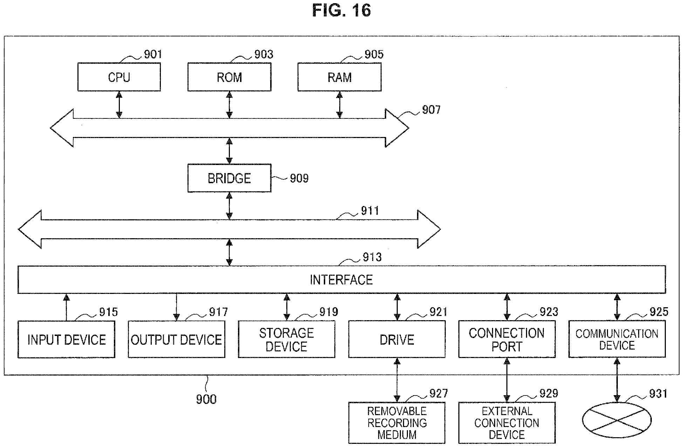

Next, with reference to FIG. 16, a hardware configuration of an information processing apparatus according to an embodiment of the present disclosure is explained. FIG. 16 is a block diagram illustrating a hardware configuration example of an information processing apparatus according to the embodiment of the present disclosure. An illustrated information processing apparatus 900 may achieve the server 300 and the client 100 in the above-described embodiment, for example.

The information processing apparatus 900 includes a central processing unit (CPU) 901, read only memory (ROM) 903, and random access memory (RAM) 905. In addition, the information processing apparatus 900 may include a host bus 907, a bridge 909, an external bus 911, an interface 913, an input apparatus 915, an output apparatus 917, a storage apparatus 919, a drive 921, a connection port 923, and a communication apparatus 925. The information processing apparatus 900 may include a processing circuit such as a digital signal processor (DSP), an application-specific integrated circuit (ASIC), or a field-programmable gate array (FPGA), alternatively or in addition to the CPU 901.

The CPU 901 serves as an arithmetic processing apparatus and a control apparatus, and controls the overall operation or a part of the operation of the information processing apparatus 900 according to various programs recorded in the ROM 903, the RAM 905, the storage apparatus 919, or a removable recording medium 927. The ROM 903 stores programs, operation parameters, and the like used by the CPU 901. The RAM 905 transiently stores programs used in execution by the CPU 901, and various parameters and the like that change as appropriate when executing such programs. The CPU 901, the ROM 903, and the RAM 905 are connected with each other via the host bus 907 configured from an internal bus such as a CPU bus. Further, the host bus 907 is connected to the external bus 911 such as a Peripheral Component Interconnect/Interface (PCI) bus via the bridge 909.

The input apparatus 915 is a device operated by a user such as a mouse, a keyboard, a touch panel, a button, a switch, and a lever, for example. The input apparatus 915 may be a remote control device that uses, for example, infrared radiation and another type of radio wave. Alternatively, the input apparatus 915 may be an external connection apparatus 929 such as a mobile phone that corresponds to an operation of the information processing apparatus 900. The input apparatus 915 includes an input control circuit that generates input signals on the basis of information which is input by a user to output the generated input signals to the CPU 901. A user inputs various types of data to the information processing apparatus 900 and instructs the information processing apparatus 900 to perform a processing operation by operating the input apparatus 915.

The output apparatus 917 includes an apparatus that can report acquired information to a user visually, audibly, haptically, or the like. The output apparatus 917 may be, for example, a display device such as a liquid crystal display (LCD) or an organic electro-luminescence (EL) display, an audio output apparatus such as a speaker or a headphone, a vibrator, or the like. The output apparatus 917 outputs a result obtained through a process performed by the information processing apparatus 900, in the form of video such as text and an image, sounds such as voice and audio sounds, vibration, or the like.

The storage apparatus 919 is an apparatus for data storage that is an example of a storage unit of the information processing apparatus 900. The storage apparatus 919 includes, for example, a magnetic storage unit device such as a hard disk drive (HDD), a semiconductor storage device, an optical storage device, a magneto-optical storage device, or the like. The storage apparatus 919 stores therein various data and the programs executed by the CPU 901, for example, various data acquired from an outside, and the like.

The drive 921 is a reader/writer for the removable recording medium 927 such as a magnetic disk, an optical disc, a magneto-optical disk, and a semiconductor memory, and built in or externally attached to the information processing apparatus 900. The drive 921 reads out information recorded on the mounted removable recording medium 927, and outputs the information to the RAM 905. Further, the drive 921 writes the record into the mounted removable recording medium 927.

The connection port 923 is a port used to connect devices to the information processing apparatus 900. The connection port 923 may be, for example, a Universal Serial Bus (USB) port, an IEEE1394 port, a Small Computer System Interface (SCSI) port, or the like. Further, the connection port 923 may be an RS-232C port, an optical audio terminal, a High-Definition Multimedia Interface (HDMI) (registered trademark) port, or the like. The connection of the external connection apparatus 929 to the connection port 923 makes it possible to exchange various data between the information processing apparatus 900 and the external connection apparatus 929.

The communication apparatus 925 is a communication interface including, for example, a communication device for connection to a communication network 931. The communication apparatus 925 may be, for example, a communication card or the like for a local area network (LAN), Bluetooth (registered trademark), Wi-Fi, or a wireless USB (WUSB). The communication apparatus 925 may also be a router for optical communication, a router for asymmetric digital subscriber line (ADSL), a modem for various types of communication, or the like. For example, the communication apparatus 925 transmits and receives signals or the like in the Internet or transmits and receives signals or the like to and from another communication device by using a predetermined protocol such as TCP/IP. Further, the communication network 931 connected to the communication apparatus 925 is a network established through wired or wireless connection. The communication network 931 may include, for example, the Internet, a home LAN, infrared communication, radio communication, satellite communication, or the like.

The example of the hardware configuration of the information processing apparatus 900 has been described. Each of the structural elements described above may include a general purpose component or may include hardware specialized for the function of each of the structural elements. The configuration may be changed as necessary in accordance with the state of the art at the time of working of the present disclosure.

<<6. Conclusion>>

An embodiment of the present disclosure may include, for example, an information processing apparatus (server or client), a system, an information processing method to be executed in the information processing apparatus or the system, a program for causing the information processing apparatus to function, and a non-transitory tangible medium having the program recorded thereon, as described above.

In addition, the above-described example uses, as an example of a marketing policy that prompts for a customer's state change, a withdrawal preventing marketing policy for maintaining a continuous contract, whilst the present embodiment is not limited to this. For example, the system according to the present embodiment is also applicable to cases as listed below.

- Promotion for continuation of an insurance contract such as a life insurance or a non-life insurance, promotion for switching to a higher-level contract, promotion for contract of another service
- Promotion for continuous utilization of a smartphone game or a smartphone application, promotion for sales of premium content
- Promotion for continuation of a service continuously utilized by way of a Web site, such as an on-line bank, promotion for a higher-level contract, promotion for contract of another service
- Promotion for access to an on-line learning site, promotion for continuation of utilization time
- Promotion for utilization of a sharing service such as car sharing, promotion for utilization of a relatively uncrowded time
- Promotion for access to an e-commerce site, promotion for tie-in sales
- Promotion for continuous utilization of a shop periodically utilized, such as a beauty salon
- Promotion for attendance at a tutoring school
- Promotion for continuation of periodic utilization of a restaurant
- Promotion for continuous visit to a hospital
- Promotion for visit of a family to a nursing home
- Promotion for continuation of health management (diet or periodic drug ingestion)
- Promotion for extension of rental period in a rental service of products, or the like, promotion for rental of another product

In addition, in the system according to the present embodiment, it is also possible to present customers whose "continuation probability in the case of implementing the policy - continuation probability in the case of not implementing the policy" is low to the marketing staff to provide the marketing staff with a clue for considering a withdrawal preventing policy that produces an effect on customers on whom the current withdrawal preventing policy is not effective.

In this case, in the user I/F unit 1401 of the client 100, a certain number of customers whose "continuation probability in the case of implementing the policy - continuation probability in the case of not implementing the policy" is low may be displayed in ascending order of "continuation probability in the case of implementing the policy - continuation probability in the case of not implementing the policy". On this occasion, a customer list may be generated so as to widen the range of variations of $x_i$ such that similar customers are not included.

Alternatively, in the user I/F unit 1401 of the client 100, characteristics of customers whose "continuation probability in the case of implementing the policy - continuation probability in the case of not implementing the policy" is low may be presented as the set of elements of contract/customer data that are likely to appear in common. On this occasion, whether there is a great difference from characteristics of customers whose "continuation probability in the case of implementing the policy - continuation probability in the case of not implementing the policy" is high may be considered.

In addition, in the present embodiment, when selecting customers for whom the withdrawal preventing policy is to be implemented in descending order of $\{p_1(x_i)\times p_2(x_i)+(1-p_1(x_i))\times p3(x_i)\}-\{1-p_1(x_i)\}$, customers whose predictive confidence levels of $p_2(x_i)$ and $p_3(x_i)$ are low may additionally be selected by priority. For example, selection may be made in ascending order of $\{p_1(x_i)\times p_2(x_i)+(1-p_1(x_i))\times p_3(x_i)\}-\{1-p_1(x_i)\}$ - (predictive confidence level of $p_2(x_i)$ + predictive confidence level of $p_3(x_i)$). As described above, this is particularly important for the case where there are few policy implementation results.

On this occasion, the confidence level of prediction may be calculated by any of (1) to (3) below.

(1) Average of the degree of similarity of the number of customers whose degree of similarity in learning data is more than or equal to a certain degree or a certain number of similar top people (in this case, it can be said that, as the numeric value is higher, the confidence level of prediction is higher)

(2) Magnitude of fluctuation in withdrawal or continuation in similar customers in learning data (in this case, it can be said that, as the fluctuation is smaller, the confidence level of prediction is higher)

(3) Relation between a posterior probability of parameter of $p_2(x_i)$ and $x_i$ (in this case, it can be said that as a Baye's posterior probability of a parameter to be used for estimation of $x_i$ is higher, the confidence level of prediction is higher).

Note that, in the case where the confidence level is low from the viewpoint of (2) while the confidence level is high from the viewpoint of (1) above, prediction is considered to be difficult with the current contract/customer data, and therefore, the marketing staff may be prompted to newly acquire characteristics for finding a difference between such customers and similar customers.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

Further, the effects described in this specification are merely illustrative or exemplified effects, and are not limitative. That is, with or in the place of the above effects, the technology according to the present disclosure may achieve other effects that are clear to those skilled in the art from the description of this specification.

Additionally, the present technology may also be configured as below.

(1) An information processing apparatus including:

an output unit configured to output an index to success of a policy that guides a customer to a targeted state, the index being calculated on a basis of past information indicating a change in a continuing state of the customer and past information indicating whether or not the policy that guides the customer who has been changed to the targeted state has been implemented.

(2) The information processing apparatus according to (1), in which the output unit calculates and outputs a policy success probability as the index to success of a policy that guides a customer to a targeted state for each customer currently in the continuing state.

(3) The information processing apparatus according to (2), in which

the continuing state of the customer is a contract state,

a change in the continuing state is withdrawal from a contract, and

the targeted state is a state in which the contract state is maintained.

(4) The information processing apparatus according to (3), including:

a learning unit configured to generate a parameter of a predictive model on a basis of past information concerning the state, past information concerning implementation of the policy, and a feature amount concerning the customer or the continuing state of the customer; and

a prediction unit configured to calculate a probability of contract withdrawal in a case of not implementing the policy for a customer currently in the continuing state and a probability of contract withdrawal prevention in a case of implementing the policy, by using the generated parameter, in which

the output unit calculates a product of the probability of contract withdrawal in the case of not implementing the policy and the probability of contract withdrawal prevention in the case of implementing the policy as the index to success of the policy for each customer currently in the continuing state.

(5) The information processing apparatus according to (4), in which

for the probability of contract withdrawal prevention in the case of implementing the policy, the learning unit generates a parameter of a predictive model taking into consideration a probability that contract withdrawal can be prevented without performing the policy.

(6) The information processing apparatus according to (4) or (5), in which

by using the product as a score indicating the index to success of the policy, the output unit outputs a list in which customer IDs are arranged in an order of the scores, to a user.

(7) The information processing apparatus according to (6), in which

the prediction unit calculates a confidence level of prediction, and

the output unit outputs the score with the confidence level of prediction.

(8) The information processing apparatus according to any one of (4) to (7), in which

on a basis of a cost of the policy and revenue anticipation at a time when the contract is maintained, the output unit calculates a profit margin to be obtained when the policy is implemented, and outputs the profit margin to a user.

(9) The information processing apparatus according to (8), in which

the output unit outputs an anticipation graph of the profit margin to the user.

(10) The information processing apparatus according to any one of (4) to (9), in which

the output unit presents a user with a characteristic having a positive effect and a characteristic having a negative effect on the probability of contract withdrawal prevention in the case of implementing the policy.

(11) The information processing apparatus according to (1) or (2), in which
the continuing state of the customer is a contract state,
a change in the continuing state is an increase in level of the contract, and
the targeted state is a state in which a level of the contract state is increased.

(12) An information processing method including:
by a processor, exerting control so as to output an index to success of a policy that guides a customer to a targeted state, the index being calculated on a basis of past information indicating a change in a continuing state of the customer and past information indicating whether or not a policy that guides the customer who has been changed to the targeted state has been implemented.

(13) A program for causing a computer to function as
an output control unit configured to exert control so as to output an index to success of a policy that guides a customer to a targeted state, the index being calculated on a basis of past information indicating a change in a continuing state of the customer and past information indicating whether or not a policy that guides the customer who has been changed to the targeted state has been implemented.

Reference Signs List

| | |
|---|---|
| 10 | system |
| 100 | client |
| 110 | local storage |
| 120 | communication unit |
| 130 | processing unit |
| 1301 | calculation unit |
| 140 | input/output unit |
| 1401 | user I/F unit |
| 200 | network |
| 300 | server |
| 310 | database |
| 3101 | customer/contract data |
| 3301 | learning unit |
| 3302 | prediction unit |
| 3303 | calculation unit |
| 320 | communication unit |
| 330 | processing unit |

**Claims**

1. An information processing apparatus comprising:

   an output unit configured to output an index to success of a policy that guides a customer to a targeted state, the index being calculated on a basis of past information indicating a change in a continuing state of the customer and past information indicating whether or not the policy that guides the customer who has been changed to the targeted state has been implemented.

2. The information processing apparatus according to claim 1, wherein the output unit calculates and outputs a policy success probability as the index to success of a policy that guides a customer to a targeted state for each customer currently in the continuing state.

3. The information processing apparatus according to claim 2, wherein the continuing state of the customer is a contract state, a change in the continuing state is withdrawal from a contract, and the targeted state is a state in which the contract state is maintained.

4. The information processing apparatus according to claim 3, comprising:

   a learning unit configured to generate a parameter of a predictive model on a basis of past information concerning the state, past information concerning implementation of the policy, and a feature amount concerning the customer or the continuing state of the customer; and

a prediction unit configured to calculate a probability of contract withdrawal in a case of not implementing the policy for a customer currently in the continuing state and a probability of contract withdrawal prevention in a case of implementing the policy, by using the generated parameter, wherein

the output unit calculates a product of the probability of contract withdrawal in the case of not implementing the policy and the probability of contract withdrawal prevention in the case of implementing the policy as the index to success of the policy for each customer currently in the continuing state.

5. The information processing apparatus according to claim 4, wherein for the probability of contract withdrawal prevention in the case of implementing the policy, the learning unit generates a parameter of a predictive model taking into consideration a probability that contract withdrawal can be prevented without performing the policy.

6. The information processing apparatus according to claim 4, wherein by using the product as a score indicating the index to success of the policy, the output unit outputs a list in which customer IDs are arranged in an order of the scores, to a user.

7. The information processing apparatus according to claim 6, wherein
the prediction unit calculates a confidence level of prediction, and
the output unit outputs the score with the confidence level of prediction.

8. The information processing apparatus according to claim 4, wherein
on a basis of a cost of the policy and revenue anticipation at a time when the contract is maintained, the output unit calculates a profit margin to be obtained when the policy is implemented, and outputs the profit margin to a user.

9. The information processing apparatus according to claim 8, wherein
the output unit outputs an anticipation graph of the profit margin to the user.

10. The information processing apparatus according to any one of claims 4 to 9, wherein
the output unit presents a user with a characteristic having a positive effect and a characteristic having a negative effect on the probability of contract withdrawal prevention in the case of implementing the policy.

11. The information processing apparatus according to claim 1 or 2, wherein
the continuing state of the customer is a contract state,
a change in the continuing state is an increase in level of the contract, and
the targeted state is a state in which a level of the contract state is increased.

12. An information processing method comprising:

by a processor, exerting control so as to output an index to success of a policy that guides a customer to a targeted state, the index being calculated on a basis of past information indicating a change in a continuing state of the customer and past information indicating whether or not a policy that guides the customer who has been changed to the targeted state has been implemented.

13. A program for causing a computer to function as
an output control unit configured to exert control so as to output an index to success of a policy that guides a customer to a targeted state, the index being calculated on a basis of past information indicating a change in a continuing state of the customer and past information indicating whether or not a policy that guides the customer who has been changed to the targeted state has been implemented.

# FIG. 1

**FIG. 2**

<u>10</u>

CLIENT 100

LOCAL STORAGE 110

PROCESSING UNIT 130

COMMUNICATION UNIT 120

INPUT/OUTPUT UNIT 140

200

SERVER 300

DATABASE 310

COMMUNICATION UNIT 320

PROCESSING UNIT 330

## FIG. 3

CLIENT SIDE    SERVER SIDE

USER

USER I/F UNIT 1401

CALCULATION UNIT 3303

PREDICTION UNIT 3302

LEARNING UNIT 3301

CUSTOMER/ CONTRACT DATA 3101

LEARNING DATA 3102

**FIG. 4**

SERVER SIDE

CLIENT SIDE

CUSTOMER/
CONTRACT
DATA ~3101

USER

USER I/F UNIT ~1401

CALCULATION
UNIT ~1301

PREDICTION
UNIT ~3302

LEARNING UNIT ~3301

LEARNING DATA ~3102

# FIG. 5

<u>20</u>

# FIG. 6

START

↓

SELECT CUSTOMERS WHO HAVE RENEWED CONTRACT OR WITHDRAWN WITHIN PAST 11 MONTHS ~S103

↓

GENERATE CUSTOMER DATA ENTRIES FOR SELECTED CUSTOMERS, AND DETERMINE SET OF THEM AS LEARNING DATA ~S106

↓

GENERATE PARAMETER OF PREDICTIVE MODEL FROM LEARNING DATA ~S109

↓

UPDATE PARAMETER OF PREDICTION UNIT BY USING GENERATED PARAMETER ~S112

↓

END

## FIG. 7

START

GENERATE one-of-k VECTOR FOR EACH ITEM OF CUSTOMER INFORMATION AND CONTRACT INFORMATION — S123

LINK one-of-k VECTORS OF RESPECTIVE ITEMS IN ORDER DETERMINED IN ADVANCE TO GENERATE FEATURE AMOUNT VECTOR — S126

END

## FIG. 8

START

ACQUIRE INFORMATION OF VALUE X OF ITEM A — S133

REFER TO DICTIONARY DATA WHICH IS GENERATED IN ADVANCE AND IN WHICH NATURAL NUMBERS HAVE BEEN ASSIGNED SEQUENTIALLY FROM 1 TO VALUES THAT ITEM A MAY TAKE, TO ACQUIRE NATURAL NUMBER i ASSIGNED TO X — S136

GENERATE k-DIMENSIONAL VECTORS IN WHICH i-TH DIMENSION IS 1 AND OTHER DIMENSIONS ARE 0 — S139

END

# FIG. 9

```
        ┌─────────────┐
        │    START    │
        └─────────────┘
               │
               ▼
┌──────────────────────────────────┐
│ SELECT CUSTOMERS WHO WILL REACH   │
│  CONTRACT RENEWAL TIME WITHIN     │──S143
│        NEXT ONE MONTH             │
└──────────────────────────────────┘
               │
               ▼
┌──────────────────────────────────┐
│  GENERATE FEATURE AMOUNT VECTOR   │──S146
│      FOR SELECTED CUSTOMERS       │
└──────────────────────────────────┘
               │
               ▼
┌──────────────────────────────────┐
│  INPUT FEATURE AMOUNT VECTOR IN   │
│ PREDICTIVE MODEL USING GENERATED  │──S149
│  PARAMETER TO CALCULATE EACH      │
│          PROBABILITY              │
└──────────────────────────────────┘
               │
               ▼
┌──────────────────────────────────┐
│  TRANSMIT PROBABILITY CALCULATED  │──S152
│ FOR EACH CUSTOMER TO USER I/F UNIT│
└──────────────────────────────────┘
               │
               ▼
        ┌─────────────┐
        │     END     │
        └─────────────┘
```

FIG. 10

1101          1102    1103      1100

CUSTOMER LIST

| CUSTOMER ID | SCORE |
|---|---|
| 124451 | 0.173 |
| 626246 | 0.173 |
| 153121 | 0.172 |
| 541467 | 0.172 |
| 77321 | 0.166 |
| 41416 | 0.161 |
| 454 | 0.159 |
| 591054 | 0.156 |
| 791154 | 0.141 |

TOP [          ] PEOPLE

DOWNLOAD WITH DETAILED INFORMATION

1104

DEFAULT PRICE OF CUSTOMER PROFIT : [ XX ] YEN

COST PER POLICY : [ XX ] YEN

DISCOUNT AMOUNT OF COUPON : [ XX ] YEN

TARGET PROFIT MARGIN : [ XX ] %

⇨ TOP **17, 690** PEOPLE

1105

## FIG. 11

## FIG. 12

1300

1301

**CUSTOMER LIST**

| CUSTOMER ID | SCORE | FUTURE CUSTOMER PROFIT | PROFIT ESTIMATE |
|---|---|---|---|
| 77321 | 0.166 | 13,000 | 2,158 |
| 626246 | 0.173 | 11,000 | 1,903 |
| 791154 | 0.141 | 12,000 | 1,692 |
| 591054 | 0.156 | 11,000 | 1,716 |
| 124451 | 0.173 | 10,000 | 1,730 |
| 454 | 0.159 | 10,000 | 1,590 |
| 153121 | 0.172 | 9,000 | 1,548 |
| 41416 | 0.161 | 9,000 | 1,449 |

PROFIT ANTICIPATION GRAPH

PROFIT (AMOUNT)          PROFIT (MARGIN)

PROFIT MARGIN          PROFIT

5 MILLION          50%

0          0%

10,000 PEOPLE          20,000 PEOPLE

-5 MILLION          -50%

1302

# FIG. 13

~1400

CUSTOMER ID : 124451

WITHDRAWAL PROBABILITY : 30%

FUTURE CUSTOMER PROFIT : 10,000 YEN

| POLICY | WITHDRAWAL PREVENTION PROBABILITY | COST | EXPECTED PROFIT | EXPECTED EFFECT |
|---|---|---|---|---|
| COUPON 1 | 58% | 800 YEN | 1,730 YEN | +930 YEN |
| COUPON 2 | 5% | 150 YEN | 130 YEN | −20 YEN |

CUSTOMER DETAILED INFORMATION

ADDRESS : ○○

AGE : × ×

SEX : MALE

CONTINUING YEARS : 3 YEARS

# FIG. 14

$p(y_i|c_i,x_i) = \sum_{hi} p(y_i|c_i,h_i,x_i)p(h_i|x_i)$

$$= \begin{cases} (1-f_{y11}(x_i,w_{,y11})) \, f_h(x_i,w_h) + (1-f_{y21}(x_i,w_{y21}))(1-f_h(x_i,w_h)) & \text{if } y_i =1 \text{ and } c_i =1 \\ (1-f_{y12}(x_i,w_{,y12})) \, f_h(x_i,w_h) + (1-f_{y22}(x_i,w_{y22}))(1-f_h(x_i,w_h)) & \text{if } y_i =1 \text{ and } c_i =2 \\ f_{y11}(x_i,w_{,y11})) \, f_h(x_i,w_h) + f_{y21}(x_i,w_{y21})(1-f_h(x_i,w_h)) & \text{if } y_i =0 \text{ and } c_i =1 \\ f_{y12}(x_i,w_{,y12})) \, f_h(x_i,w_h) + f_{y22}(x_i,w_{y22})(1-f_h(x_i,w_h)) & \text{if } y_i =0 \text{ and } c_i =2 \\ f_h(x_i,w_h) & \text{if } y_i =1 \text{ and } c_i =0 \\ (1-f_h(x_i,w_h)) & \text{if } y_i =0 \text{ and } c_i =0 \end{cases}$$

$c_i \in \{0,1,2\}$: 0 IN CASE OF NOT IMPLEMENTING POLICY, 1 IN CASE OF IMPLEMENTING POLICY 1, AND 2 IN CASE OF IMPLEMENTING POLICY 2

$p(y_i=0|c_i=1, h_i=1, x_i)=f_{y11}(x_i;w_{y11})$ : $w_{y11} \in R^{d_{y11}}$

$p(y_i=0|c_i=2, h_i=1, x_i)=f_{y12}(x_i;w_{y12})$ : $w_{y12} \in R^{d_{y12}}$

$p(y_i=0|c_i=1, h_i=0, x_i)=f_{y21}(x_i;w_{y21})$ : $w_{y21} \in R^{d_{y21}}$

$p(y_i=0|c_i=2, h_i=0, x_i)=f_{y22}(x_i;w_{y22})$ : $w_{y22} \in R^{d_{y22}}$

$w_{yst}$ IS PARAMETER, AND $d_{yst}$ IS CORRESPONDING PARAMETER DIMENSION, WHERE $s \in \{1,2\}$, $t \in \{1,2\}$

# FIG. 15

~1500

COUPON POLICY

ITEMS HAVING POSITIVE EFFECT

| ITEM: VALUE | PARAMETER VALUE |
|---|---|
| SEX: MALE | 2.1 |
| CONTRACT CONTINUING YEARS: 1 YEAR | 1.9 |
| GENRE OF FREQUENTLY VIEWED VIDEO: ANIMATION | 1.1 |

ITEMS HAVING NEGATIVE EFFECT

| ITEM: VALUE | PARAMETER VALUE |
|---|---|
| NUMBER OF CONTRACT CONTINUING YEARS: 3 YEARS | -1.1 |
| SEX: FEMALE | -0.9 |
| GENRE OF FREQUENTLY VIEWED VIDEO: DRAMA | -0.9 |

FIG. 16

```
         ~901              ~903              ~905
      ┌─────────┐     ┌─────────┐     ┌─────────┐
      │   CPU   │     │   ROM   │     │   RAM   │
      └─────────┘     └─────────┘     └─────────┘
           ↕               ↕               ↕
      ◁═══════════════════════════════════════════▷  ~907

                    ┌─────────┐
                    │ BRIDGE  │──~909
                    └─────────┘
                         ↕
      ◁═══════════════════════════════════════════▷  ~911
                         ↕
                                          ~913
┌───────────────────────────────────────────────────────┐
│                      INTERFACE                          │
└───────────────────────────────────────────────────────┘
     ↑          ↓          ↕          ↕          ↕          ↕
  ~915       ~917       ~919       ~921       ~923       ~925
┌────────┐┌────────┐┌────────┐┌────────┐┌──────────┐┌────────────┐
│ INPUT  ││ OUTPUT ││STORAGE ││ DRIVE  ││CONNECTION││COMMUNICATION│
│ DEVICE ││ DEVICE ││ DEVICE ││        ││   PORT   ││   DEVICE    │
└────────┘└────────┘└────────┘└────────┘└──────────┘└────────────┘
                                   ↕          ↕           ↕
        ~900                    ~927       ~929        ~931
                              ┌────────┐┌──────────┐
                              │REMOVABLE││ EXTERNAL │    ⊗
                              │RECORDING││CONNECTION│
                              │ MEDIUM  ││  DEVICE  │
                              └────────┘└──────────┘
```

## INTERNATIONAL SEARCH REPORT

| International application No. |
|---|
| PCT/JP2016/081598 |

A. CLASSIFICATION OF SUBJECT MATTER
*G06Q30/02*(2012.01)i

According to International Patent Classification (IPC) or to both national classification and IPC

B. FIELDS SEARCHED

Minimum documentation searched (classification system followed by classification symbols)
G06Q30/02

Documentation searched other than minimum documentation to the extent that such documents are included in the fields searched
Jitsuyo Shinan Koho        1922-1996    Jitsuyo Shinan Toroku Koho    1996-2016
Kokai Jitsuyo Shinan Koho   1971-2016    Toroku Jitsuyo Shinan Koho    1994-2016

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2002-269329 A  (Yasufumi UTSUMI),<br>20 September 2002 (20.09.2002),<br>paragraphs [0051] to [0214]<br>& US 2004/0078796 A1<br>paragraphs [0097] to [0301]<br>& WO 2002/056224 A1      & EP 1351175 A1<br>& CN 1484802 A             & KR 10-2003-0086249 A | 1-3,11-13<br>4-10 |
| Y<br>A | JP 2015-166989 A  (Nomura Research Institute,<br>Ltd.),<br>24 September 2015 (24.09.2015),<br>paragraphs [0015] to [0042]; fig. 4<br>(Family: none) | 1-3,11-13<br>4-10 |

| ☒ Further documents are listed in the continuation of Box C. | ☐ See patent family annex. |
|---|---|

* Special categories of cited documents:
"A" document defining the general state of the art which is not considered    to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>    27 December 2016 (27.12.16) | Date of mailing of the international search report<br>    10 January 2017 (10.01.17) |
|---|---|
| Name and mailing address of the ISA/<br>    Japan Patent Office<br>    3-4-3,Kasumigaseki,Chiyoda-ku,<br>    Tokyo 100-8915,Japan | Authorized officer<br><br><br>Telephone No. |

Form PCT/ISA/210 (second sheet) (January 2015)

**INTERNATIONAL SEARCH REPORT**

| International application No. |
| --- |
| PCT/JP2016/081598 |

**C (Continuation). DOCUMENTS CONSIDERED TO BE RELEVANT**

| Category* | Citation of document, with indication, where appropriate, of the relevant passages | Relevant to claim No. |
| --- | --- | --- |
| A | JP 2015-14828 A (Nippon Telegraph and Telephone Corp.), 22 January 2015 (22.01.2015), paragraphs [0024] to [0112] (Family: none) | 1-13 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2008152321 A

### Non-patent literature cited in the description

- **BRENDAN DUNCAN ; CHARLES ELKAN.** Probabilistic Modeling of a Sales Funnel to Prioritize Leads. *Proceedings of the 21th ACM SIGKDD International Conference on Knowledge Discovery and Data Mining,* 2015, 1751-1758

- **LIHONG LI ; WEI CHU ; JOHN LANGFORD ; ROBERT E. SCHAPIRE.** A Contextual-Bandit Approach to Personalized News Article Recommendation. *Proceedings of the 19th International Conference on World Wide Web,* 2010, 661-670